(19) Europäisches Patentamt
European Patent Office
Office européen des brevets

(11) Publication number: **0 154 085 B1**

# (12) EUROPEAN PATENT SPECIFICATION

(45) Date of publication of patent specification: **04.07.90**

(51) Int. Cl.$^5$: **G 11 B 5/596** // G11B21/10

(21) Application number: **84308193.6**

(22) Date of filing: **26.11.84**

## (54) Head positioning apparatus for a magnetic disc device.

(30) Priority: **25.11.83 JP 221484/83**
**20.08.84 JP 171553/84**

(43) Date of publication of application:
**11.09.85 Bulletin 85/37**

(45) Publication of the grant of the patent:
**04.07.90 Bulletin 90/27**

(84) Designated Contracting States:
**DE FR GB**

(56) References cited:
**US-A-3 534 344**
**US-A-4 390 912**

**WIRELESS WORLD, vol. 88, no. 1559, August 1982, pages 33-37, Sheepen Place, Olchester, GB; J.R. WATKINSON et al.: "Disc drives"**

**IBM TECHNICAL DISCLOSURE BULLETIN, vol. 23, no. 2, July 1980, pages 738-742, New York, US; R.C. JAHNKE: "Track-locating and -following apparatus for a flexible disk file"**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Mizuno, Masahiro**
**2-2-47, Naka-kaigan Chigasaki**
**Kanagawa Prefecture (JP)**
Inventor: **Baba, Hiroshi**
**Zengyo Danchi No. 4-8-507 3768-3, Fujisawa**
**Fujisawa Kanagawa Prefecture (JP)**
Inventor: **Kanemaru, Shoji Shimokurata Danchi No. 5-503**
**615, Shimokura-cho Totsuka-ku**
**Yokohama Kanagawa Prefecture (JP)**

(74) Representative: **Lawson, David Glynne et al**
**MARKS & CLERK 57-60 Lincoln's Inn Fields**
**London WC2A 3LS (GB)**

(56) References cited:
**IBM TECHNICAL DISCLOSURE BULLETIN, vol. 20, no. 8, January 1978, pages 3243-3247, New York, US; R.L. DEREMER et al.: "Sector servo method"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

## Description

Background of the invention

This invention relates to a positioning control device of a head. More particularly, it relates to positioning a head to a data track of a disk such as a magnetic disk device or an optical disk device and the likes.

In the below, a conventional magnetic head and a prior-art magnetic disk device are described in detail by way of examples in case of a head and a disk device as claimed.

Heretofore, a prior-art magnetic disk device of a memory used, for example, in a computer and the likes is configured as shown in Figure 1. In Figure 1, numeral 1 designates a magnetic disk, and information is recorded on tracks arranged concentrically at a predetermined interval. Numeral 2 designates a spindle motor for rotating the disk 1 at a predetermined speed. Numeral 3 designates a magnetic head for reading/writing information in the tracks of the disk 1. Numeral 4 designates an actuator for moving the head 3 by the drive force of a positioning stepping motor 5 (STM) to position the head 3 on an arbitrary track. Numeral 6 designates a base for fastening the motor 2, the actuator 4 and the motor 5. Numeral $7_{PA}$ designates an index sensor for detecting the index of the rotating section of the motor 2 and outputting an index signal per one revolution.

The circuit arrangement of the magnetic disk device thus configurated as described above is now described by referring to Figure 2.

In Figure 2, numeral 8 designates a positioning control device (PCD) for outputting a drive signal B for rotating the motor 5 when receiving a head movement command signal A from a controller and outputting a positioning completion signal Z when the head 3 is completely moved to the track position to be positioned. Numeral 9 designates a driving amplifier device (DAD) for amplifying the drive signal B, rotating the motor 5 by the drive power D and setting the stopping angle of the motor. Thus, the head 3 is positioned on the track of the disk 1. When the index sensor detects an index and the index detection signal is received by an external circuit (not shown), the head can read/write information on the corresponding track of the disk 1.

Environmental temperature varies and since the temperature expansion coefficients and the likes of the disk 1, the actuator 4 and the base 6 of the positioning control device of the prior-art disk apparatus are different from each other, the track on the disk 1 is relatively displaced from the position of the positioned head 3, an interference between the magnetisms produced by the adjacent tracks occurs, and the reliability in reading/writing information on the tracks by the head is deteriorated. Such a problem creates difficulties when a defect for increasing the density of the track to increase the total number of tracks on the disk.

IBM technical disclosure bulletin, volume 20, number 8, January 1978, pages 3243 to 3247, New York, US: R. L. Dremer et al which forms the preambles of Claims 1 and 7 discloses a disk having position information recorded in sectors alternated with data sectors on a magnetic disk. Information on the servo sector is recorded offset one half track pitch from the centers of adjacent data tracks. The position correction of the head is carried out in dependence upon the wave forms obtained from the servo sectors.

IBM technical disclosure bulletin, volume 23, number 2, July 1980, pages 738 to 742 discloses an apparatus for locating and following data tracks recorded on disks. Servo information is stored in a sector on the disk. The servo information is stored in a memory and used for postioning the head during subsequent revolutions of the track. As each sector is read by the head, the position information is converted into a digital number by A/D converter and this information is stored in a memory. During subsequent revolutions, the head is moved under the control of a micro-computer in dependence upon the information stored in the memory. The position of the inner and outer reference track can be measured, new nominal track locations being computed on the basis of the reference tracks.

Wireless World volume 88 number 1559 pages 33 to 37 discloses an apparatus for adjusting the head position relative to tracks on a disk. The apparatus has a seeking function which uses guard bands to detect a 0 cylinder or track. The seeking function locates other tracks by a counting technique.

Summary of the invention

An object of this invention is to eliminate the above-mentioned disadvantages inherent in the prior-art disk device, and a further object is to provide a disk device which can compensate when positioning a magnetic head by using position information read from the head after positioning the head. Thus being achieved by writing position information for setting the head at a position normal to the radial direction of the data tracks of the head on a part of the data track.

Another object of this invention is to provide a magnetic disk device which can accurately detect a track 0 as a reference track by using the position information by writing in advance the position information on a part of the tracks on the magnetic disk surface and controlling the position of the magnetic head to read the information from the magnetic disk.

Still another object of the invention is to provide an index timing sensor having functions as a reference for timing, for detecting the position information, and for indicating a reference for starting to operate factors (e.g., position information outputs $V_A$, $V_B$) to calculate the amount of positional displacement in addition to the function of the prior art index sensor which is used only to detect the index and to indicate the starting time for read/writing data.

The present invention provide disk devices positioning a head according to independent Claims 1 and 7 with dependent Claims 2 to 6 and 8 to 10 respectively concerning further detailed embodiments.

Brief description of the drawings

Figure 1 is a mechanical view showing a prior-art magnetic disk device;

Figure 2 is a block diagram showing a positioning control device of a magnetic head in a prior-art magnetic disk device;

Figure 3 is a view showing the configuration of an embodiment of a magnetic disk in accordance with the present invention;

Figure 4 is a view showing the configuration of position information areas;

Figure 5 is a block diagram showing another embodiment of a positioning control device of a magnetic disk device according to the present invention;

Figure 6 is a waveform diagram showing the varied state of the position information output to a time;

Figure 7(a) through 7(c) are waveform diagrams showing waveforms of processed rectified outputs;

Figure 8 is a view showing the position displaced state of the magnetic head;

Figures 9 and 10 are waveform diagrams showing the states of varied position information outputs to the position of the magnetic head;

Figure 11 is a graph showing the characteristic for presuming the amount of the displaced positions of the tracks from the displaced position of the inner and outer tracks according to still another embodiment of the present invention;

Figure 12 is a view of the configuration showing the position information areas of the case that the both end sides are most inner and outer sides in accordance with the embodiment shown in Figure 11;

Figure 13 is a view showing the configuration of a magnetic disk surface of the magnetic disk device according to still another embodiment of the present invention;

Figure 14 is an enlarged view showing the position information areas of the magnetic disk surface shown in Figure 13;

Figure 15 is a block diagram of a magnetic disk device in accordance with still another embodiment of the present invention; and

Figure 16 is a signal waveform diagram showing thereas output of the magnetic head position and the position information for describing the principle of the operation of the present invention.

Description of the preferred embodiments

Figures 3 through 5 illustrate an embodiment of a positioning control device of a magnetic head in accordance with the present invention, wherein the same symbols in Figures 1 and 2 denote the same parts. In Figures 3 to 5, numeral 10 designates data tracks, which are formed concentrically on a magnetic disk 1 for recording/regenerating data, and formed as 10a through 10e as shown in Figure 4. Numeral 11 designates position information areas including position information S started from the index (IDX) position $\overline{O}$. The position information S has the first position information area S1 and second position information area S2 obtained by alternatively disposing flux-reversal areas 12 and non-flux-reversal areas 13 radially and laterally in parallel as shown in Figure 4. In this case, while the flux-reversal areas 12 or the first position information S1 correspond to the non-flux-reversal areas 13 of the second position information S2, the areas 12 and 13 of the information S1, S2 have the same interval as the data tracks 10a to 10e, but are displaced by half pitch to the data tracks. In Figure 5, numeral 14 designates a rectifier (RECT) for outputting an output E produced by rectifying the position information outputted from the head 3. Numeral 15 designates an integrator (INTG) for integrating the rectified output E and outputting an amplitude F of the position information. Numeral 16 designates an analog digital converter (A/D) for digitizing the amplitude F and outputting the digitized position information G. Numeral 17 designates a control device for compensating position displacement (CDC) for detecting the position displacement from the position information G and outputting a position compensating output H. Note that block 17p is relevant to the embodiment shown in Figures 11—12. Numeral 18 designates a digital analog converter (D/A) for analogously converting an electric current supplied to the stepping motor 5 by the position compensating output H. An index timing signal T outputted from an index timing sensor (IDX TM SNR) 7 provides the start timing of the position information area 11 to the control device 17.

The operation of the positioning control device of a magnetic head configurated as described above is now described by referring to the characteristic diagrams of Figures 4 to 9. Assume that the disk 1 rotates in a direction by an arrow M. When a head movement command signal A is received from a controller, the head is not disposed on the track. Namely, it is not accordingly necessary to compensate the position displacement of the head. This signal A is converted into the drive signal B including no position compensation of the motor 5 through the control device 17 and the D/A converter 18. When the signal A is fed to the motor, the head is moved to the arbitrary track through the actuator by the rotation of the positioning device. The position compensation may then be executed. The compensation sequence is now described. The index timing signal T is outputted once from the index timing sensor 7 whenever the disk 1 is rotated by one revolution. The position information output P is outputted from the head 3. The position information output P has, as shown in Figure 6, a voltage output P1 (2VA) corresponding to the first position information S1 and a voltage output P2 (2VB) corresponding to the second position information S2, fed to the rectifier 14, in which the voltage outputs P1 and P2 respectively become voltage outputs corresponding to times $t_A$ and $t_B$ from the index timing signal T. The time $t_A$ is an arrival time of the head 3 from the start point SI of the first position information S1 to the end point Sm, and the time $t_B$ is an arrival time of the head 3 from the start point SI of the first position information S1 to the end point Sn of the second position information S2. The voltages VA and VB are the maximum and the minimum amplitude output voltages of the head 3, respectively The position information output P is processed, as shown in Figure 7(a) and 7(b), by the rectifier 14 and the integrator 15, and further digitally converted by the A/D converter 16. The control device 17 samples the digitally converted position information output during each period of the times t from the index timing signal of $0<t<t_A$ and $t_A<t<t_B$ as input thereof sequentially.

On the other hand, the position information output P is proportional to the corresponding area of the flux-reversal areas 12 of the first and second position information S1, S2 read by the head 3. Therefore, the variation in the position information output P corresponding to the positions 3a, 3b, 3c of the head 3, as shown in Figure 8 becomes as shown in Figures 9(b), 9(c), 9(d). As is apparent from the Figure 9, when the head 3 is accurately positioned at the position 3b to the center of the n'th track, the head 3b is affected by the equivalent influence from the flux-reversal areas 12a of the first position information S1 and the flux-reversal areas 12b of the second position information S2. Thus, as shown in Figure 9(c), the outputs P1 and P2 becomes of equal value, and the output P becomes constant. On the other hand, when the head 3 is disposed at the position 3b displaced toward the adjacent n+1 track side to the n track, the head 3 is more strongly affected by the influence from the flux-reversal areas 12a. Thus, as shown in Figure 9(b), the output P1 becomes larger than the output P2. When the head 3 is disposed at the position 3c displaced toward the adjacent n−1 track side to the n track, the head 3 is more strongly affected by the influence of the flux-reversal areas 12b. Thus, as shown in Figure 9(d), the output P2 becomes larger than the output P1. The position of the head to the n track can be discriminated by observing the magnitudes of the outputs P1 and P2.

If the amount of position displacement from the center of the track is indicated by X, the track pitch (the distance between the tracks) is indicated by IP, the maximum output voltage is indicated by $\bar{V_o}$, the output voltage corresponding to the first position information S1 of the head is indicated by Va, and the output voltage corresponding to the second position information S2 is indicated by Vb, the characteristic shown in Figure 10 can be described as below.

For Figure 10, in the range of

$$-IP/2<X<IP/2,$$

$$Va=(\bar{V_o}/IP)X+\bar{V_o}/2 \quad (1)$$

$$Vb=-(\bar{V_o}/IP)X+\bar{V_o}/2 \quad (2)$$

are obtained.

From the equations (1) and (2),

$$Va-Vb=2(\bar{V_o}/IP)X \quad (3)$$

can be obtained. Then, position displacement X can be represented by

$$X=\{(IP/2\bar{V_o})(Va-Vb)\} \quad (4)$$

On the other hand, the value of Va+Vb becomes from the equations (1) and (2)

$$Va+Vb=\bar{V_o} \quad (5)$$

When the equation (5) is substituted into equation (4), the position displacement X can be represented by

$$X=(Ip\cdot(Va-Vb)/2\cdot(Va+Vb)) \quad (6)$$

The equation (6) indicates that, when the track pitch IP is known, the displacing direction and the amount of position displacement from the center of the track of the head 3 can be calculated by using the position information outputs Va, Vb.

For example, assuming that the track pitch IP=100 microns, the output voltage Va=3V and the output voltage Vb=1V, from equation (6),

$$X=\{100\times(3-1)/2\times(3+1)\}=25$$

Thus, the position of the head can be detected to be displaced by 25 microns toward the n+1 track. The relationship between the displacement direction and the polarity of X is inverted for every track, but it may be readily discriminated whether the track number is even or odd, as the track pitch IP is generally known.

As described above, when equation (6) is evaluated with the position information output voltages Va, Vb by the control device 17, the position displacement of the head 3 can be calculated.

The control device 17 can further compensate for the position displacement of the head 3 that is detected as described above so that the said displacement approximately become zero.

The stopping angle of the stepping motor is generally determined by the combination of the excitation phases. It is known that, when the current values supplied to the phases are varied, the stopping angle can be finely controlled. This is called a microstep or a vernier drive. According to the invention, the position displacement of the head 3 can be compensated by finely varying the stopping angle of the stepping motor 5, by altering the interphase current of the motor 5 as result of changing the input of the D/A converter 18 by means of the control device 17.

Another embodiment of the invention is now described by referring to Figure 12. In this case the position information is provided only in the inner and outer most tracks ($10_c$, $10_{c+n-1}$,..., indicating the center of the respective tracks). In other words, the position displacements of the inner and outer most tracks are detected and memorized on the basis of the position information provided on the inner and outer most tracks. In this embodiment, in the circuit of Figure 5 block 17 presumed position displacement output means 17p is provided, and when the power is turned on the head is moved by the operating means to the inner most or outer most track, the amount of position displacement is memorized by the above presumed position displacement output means and further the amount of position displacement is made and memorized by presumed position displacement output means 17p as shown in Figure 11. (This embodiment can be thought of to include 17p). It is noted that the presumed position displacement outputting means for presuming the position displacement of the positioning track by linear approximation of the characteristic shown in Figure 11 from the detected values is provided, and when positioning the head on a predetermined track, the head can be repositioned in advance to the presumed position displacement by compensating for the presumed position displacement. According to this method, the time period required for compensation can be shortened.

The system detects the displacement for the inner most and outer most tracks at regular intervals. Each time the system scans the position information on the inner most and outer most tracks, it recalculates the presumed position displacements for the intermediate tracks.

In the embodiments described above, the control device 8 and the control device 17 are separately provided. However, these devices may be summarized in a microcomputer.

In the embodiments described above, the magnetic disk apparatus driven by the stepping motor has been described. However, the invention may also be applied to a magnetic disk device driven by a voice coil, an optical disk device or a laser disk apparatus.

From the foregone description it is seen that the configuration according to the positioning control device, of the magnetic head of the present invention, as described above, provides a method for applying positioning information to a part of the data tracks and compensating the positioning of the head for environmental change. Therefore, the relative position displacement between the data track and the magnetic head due to the variation in the environmental temperature can be minimized, thereby improving the systems reliability.

Furthermore, high track density can be achieved at lower cost.

Then, still another embodiment of the invention is now described by referring to Figures 13 through 16. In Figures 13 to 16, the same symbols in Figures 1 through 12 denote the same parts.

A head and a disk are now described in case of a magnetic head and a magnetic disk, respectively.

Figure 13 shows the area of the magnetic disk surface. In Figure 13, numeral 10 designates data track areas of concentric tracks for memorizing data. Numeral 27 designates guard band areas formed on the outside of the data track areas, and which comprises the areas 27a, 27b. $\overline{O}$ designates an index position corresponding to an index timing signal T outputted once per one revolution of a spindle motor. Numeral 11 designates a read-only position information area written in advance on a part of the data track areas 10 and the guard band areas 27, starting from the index position $\overline{O}$. Figure 14 is an enlarged view showing the essential portion of the position information areas 11 in Figure 13. In Figure 14, numerals 30a and 30b designate flux reversal areas which are provided corresponding to the data tracks. Numeral 31 designates non-flux-reversal areas. The position information areas 11, the flux-reversal areas, are distinctly indicated from other areas by hatched lines. In the position information areas in the data track areas 10, two flux-reversal areas 30a, 30b are arranged at both sides of the nonflux reversal area equally to the interval of the each data track so as not to be adjacent to each other in a manner socalled "checkerwise pattern shape". The areas 30a are disposed in the vicinity of the index position $\overline{O}$, and the areas 30b are disposed remotely from the index position in such a manner that the areas 30a, 30b are radially displaced by half pitch of the interval of the data track. In the position information areas of the guard bands 27a, 27b, one fluxreversal area 30c is recorded, and a non-fluxreversal area is recorded remotely therefrom in the vicinity of the index position $\overline{O}$. This area 27a extends towards the outer diameter of the disk, away from track 0. Both the areas are formed in the outer peripheral direction from the center of the track 0. In the position information area of the guard band area 27b towards the inside of track N, one flux-reversal area 30d is recorded remotely from the index position $\overline{O}$, and the non-flux-reversal area is recorded in the vicinity of the index position. Both the areas are formed toward the inner peripheral direction from the center of the track N. Figure 15 is a block diagram of a circuit for detecting track 0 on the basis of the position information of 11 recorded on the magnetic disk surface. In Figure 15, numeral 32 designates a rectifier circuit (RECT CKT) for rectifying a signal F ready by the head 3. Numeral 33 designates a smoothing circuit (SMTH CKT) for smoothing the signal rectified by the rectifier 32. Numeral 34 designates a signal sample and hold circuit (SMPL & HOLD) for sampling and holding a smoothed signal H output by the smoothing circuit 33 at a predetermined time with respect to the index timing signal T from an index timing sensor 7 sent once per every one revolution of the spindle motor as a reference timing signal. Numeral 35 designates a comparator circuit (COMP CKT) for comparing two signals I and J which are held in a holding circuit 34 at a timing $t_B$ on the basis of the index timing signal T and outputting any value of −, 0, + of a comparison output signal K to a positioning control circuit (PC CKT) 36 according to the position corresponding to the track 0 of the head. The control circuit 36 for detecting track 0 outputs a control signal L to a drive circuit 22 (DRVE CKT) for driving a stepping motor 5 for positioning the head 3.

The operation is described by referring to the signal waveform diagram of Figure 16. The signal waveform diagrams of Figures 16(a), 16(b), 16(c) indicate the signals of the position information areas which are read from the head 3, when the head 3 is positioned on the guard band area 27b on the inner peripheral when the head 3 is positioned on the center line of the track 0 (10a), and when the head 3 is positioned on the guard band area 27a on the outer peripheral respectively. The positions of the head 3 thereof are as shown by 3a, 3b, 3c in Figures 14, respectively. In the case that the head 3 is positioned to 3a, 3b, 3c, the displays in Figure 16 depict a magnetic head read signal R, a rectified signal U and a smoothed signal W read in the position information area 11 using the index timing signal T as a reference timing signal, a holding signal I sampled at a time $t_A'$, and a holding signal J sampled at a time $t_B'$ and a comparison output signal K, respectively. The time t which constitutes the time base of the method uses as a reference at this time the signal output time by the index timing signal T at t=0. The range 0 to $t_A$ indicates the period of time for reading the fluxreversal 30a, 30c near the index position $\bar{O}$ of the position information area of the disk 1, and the range $t_A$ to $t_B$ indicates the period of time for reading from the flux-reversal areas 30b, 30d remote from the index position $\bar{O}$. In Figure 16, $t=t_A'$ and $t=t_B'$ are sampling times for sampling and holding the smoothed signal W by the holding circuit 34. $t=t_B'$ is also the period of time for operating the comparator 35.

When the comparison output signal K as the output of the comparator 35 is observed, the signal K is outputted as any one of the following signals −, 0 or +. These occur when the head 3 is disposed in the guard band area 27b at the inner peripheral side of the disk 1 (3a in Figure 14), when the head 3 is disposed on the track 10 (3b in Figure 14), or when the head 3 is disposed on the guard band area 27b at the outer peripheral side (3c in Figure 14), respectively. In other words, when the comparison output signal K as the output signal of the comparator 35 is known, the head 3 position can be determined by the position information of the position information areas 11 recorded on the disk 1 whether the head 3 is disposed on the guard band area 27b at the inner peripheral side of the disk 1, on the track area 10 or on the guard band area 27a at the outer peripheral side.

To detect a track 0 (10a in Figure 14), the head 3 is once positioned on the guard band area 27a on the outer peripheral, the head 3 is then moved to the inner peripheral while detecting the comparison output signal K, and the change from + to 0 of the comparison output signal K is detected, which results in an output of the track 0 signal Z in the positioning control circuit 36 which inputs the comparison output signal K. In other words, when the change from + to 0 of the comparison output signal K is detected, it is allowed to output a track 0 signal Z which indicates that the positioning operation is complete. Using by the positioning control circuit 36 and the change from + to 0 of the comparison output signal K, the head 3 can be positioned on track 0. The fact that the head 3 is correctly positioned on track 0 may be confirmed by performing an operation similar to the original positioning procedure. It can be confirmed that the head is on track 0 by displacing the head and observing the output to confirm either the presence of the guard band 27a or 27b or track positioning information 12, 13.

As described above, track 0 is the outer peripheral of the disk 1 recorded on. However, even when the track 0 is recorded on the inner peripheral, a similar operation can be performed and the same effect may be attained.

As described above, although a magnetic disk device driven by a stepping motor has been described, the present invention may be applied to a magnetic disk apparatus driven by a voice coil, or an optical disk device or a laser disk device.

According to the present invention as described above, the position information areas are provided on a part of the data track of the magnetic disk, and the track 0 can be detected by the positioning control device that makes use of the position information. Therefore, a mechanical external sensor may be eliminated. This invention provides the magnetic disk device having high accuracy thereby.

**Claims**

1. A disk device positioning a head (3) for reading/writing information from/on a data track of a plurality of data tracks (10) concentrically formed on a disk, the disk comprising position information means (S1, S2) provided over a predetermined radial area (11) on the disk and having a predetermined pattern for providing different pieces of information in accordance with the position displacement of the head (3) from the central position of the data track, wherein the disk device comprises:

a disk drive motor (5);

position displacement means (17) for receiving an input (G) representative of the different pieces of information from said position information means, and for generating a position output (H);

an index timing sensor (7) for detecting an index at every revolution and feeding a timing signal (T) for notifying a starting point, of the predetermined radial area (11) on the disk, to the position displacement means (17); and

a positioning device (5, 9, 18) for receiving the position output (H), for producing in response to the output (H) an analog signal for moving the head (3) in a direction transverse to the track so as to re-position the head;

the disk device being characterised by;

rectifying means (14) for receiving and rectifying position signals (P) read by the head (3), which signals correspond to the pieces of information;

integrating means (15) for integrating the rectified position signals (E); and

an A/D converter means (16) for converting the integrated and rectified position signals (F) into digital signals (G), and supplying the digital signals (G) to the position displacement means (17) in digital form, the index detected by the index timing sensor being provided on a rotary unit of the motor, and the position displacement means (17) receives the digital signals (G) in coincidence with the timing signals (T) from the index timing sensor (2).

2. A disk device according to Claim 1, wherein said data track is a selected data track, the position output (H) corresponds to any deviation between the head position and the central position of the selected data track and the re-positioning of the head is such as to minimise the position displacement of the head from the central position of the track.

3. A disk device according to Claim 1, wherein said data track is an arbitrary data track, the position information means (S1, S2) is provided on a reference data track disposed at least at both end sides of the plurality of data tracks on the disc, the position displacement means (17P) is operative for determining the positions of the reference tracks in response to the input (G), and the position output (H) corresponds to any intermediate data track between the reference data tracks on the basis of an interpolation technique.

4. A disk device as claimed in Claim 2 or Claim 3, wherein the positioning device comprises an actuator.

5. A disk device as claimed in Claim 2 or Claim 3 or Claim 4, wherein the position information means (S1, S2) comprises two flux-reversal parts (12a, 12b, 12, 13) provided corresponding to both sides of the data track (10), and the head is a magnetic head.

6. A disk device as claimed in Claim 5, where dependent upon Claim 2, wherein the two flux-reversal parts (12a, 12b; 12, 13) have a pitch equal to the interval of the data tracks, are respectively displaced by half the pitch of the data tracks on both sides of the data track, and the parts (12a, 12b) are displaced longitudinally of the data track so as not to be superposed on each other.

7. A disk device for positioning a head (3) for reading/writing information from/on a data track of a plurality of data tracks (10) concentrically formed on a disk, the disk comprising guard band areas (27a, b) disposed inside and outside of the data tracks (10), and position information means (S1, S2) provided over a predetermined radial area (11) on the data tracks and guard band areas and having a predetermined pattern for providing head position information, wherein the disk device comprises:

a disk drive motor (5);

a positioning device (5, 22) for moving the head (3) in a direction transverse to the track in dependence upon a control signal (L);

a position control means (34, 35, 36) for generating the control signal in dependence on the position of the head in relation to the guard band areas and data tracks;

the disk device being characterised by:

rectifying means (32) for receiving and rectifying position signals (R) representative of the head position information read by the head (3);

a smoothing circuit (33) for smoothing the rectified output (U) of the rectifying means (32); and

an index timing sensor (7) for depicting an index provided on a rotary unit of the motor at every revolution and feeding a timing signal (T) for notifying a starting point, of the predetermined radial area (11) on the disk, to the position control means;

wherein the position control means comprises a sample and hold circuit (34) for providing, in concidence with the timing signals, from the index timing sensor (7), sampled signals (I, J) indicative of whether the head is positioned over the inner or outer guard band area or over one of the data tracks, a comparator (35) for preparing the sampled signals and providing a comparison output signal (K), and a position control circuit (36) for generating the control signal (L) in response to the comparison output signal (K).

8. A disk device as claimed in Claim 7, wherein the disk drive motor (5) is a stepping motor.

9. A disk device as claimed in Claim 7, wherein the position information of said data track areas has two flux-reversal areas (30a, 30b) and non-flux-reversal areas (31) provided at both sides of the data tracks, and the position information of each of said guard band areas has a flux-reversal area (30c, 30d) and a non-flux-reversal area.

10. A disk as claimed in Claim 9 wherein the two flux reversal areas of said data tracks areas are equal to the interval of the data track, displaced by half pitch of the interval of the data tracks at both sides of the data tracks, displaced in the widthwise direction of said disk so as not to be superposed to each other, and the data track adjacent to the guard band area is continued to the flux-reversal area radially extending of said guard band area.

**Patentansprüche**

1. Plattengerät zur Positionierung eines Kopfes (3) zum Lesen/Schreiben von Information von einer bzw. auf einer Datenspur von einer Vielzahl von Datenspuren (10), die konzentrisch auf einer Platte ausgebildet sind, wobei die Platte Positionsinformationseinrichtungen (S1, S2) aufweist, die über einem vorgegebenen radialen Bereich (11) auf der Platte vorgesehen sind und die ein vorgegebenes Muster haben, um verschiedene Teile von Informationen in Abhängigkeit von der Positionsverschiebung des Kopfes (3) aus der zentralen Position der Datenspur zu liefern, wobei das Plattengerät folgendes aufweist:

einen Plattenantriebsmotor (5);

eine Positionsverscheibungseinrichtung (17), um ein Eingangssignal (G) zu empfangen, das repräsentative ist für die verschiedenen Teile von Informationen von den Positionsinformationseinrichtungen, und um ein Positionsausgangssignal (H) zu erzeugen;

einen Indexzeitsteuerungssensor (7) zu Abtastung eines Index bei jeder Umdrehung und zur Lieferung eines Zeitsteuerungssignals (T) zur Bezeichnung eines Ausgangspunktes, bezüglich des vorgegebenen radialen Bereiches (11) auf der Platte, zu der Positionsverschiebungseinrichtung (17); und

eine Positionierungseinrichtung (5, 9, 18), um das Positionsausgangssignal (H) zu erhalten, um in Abhängigkeit von dem Ausgangssignal (H) ein analoges Signal zu erzeugen, um den Kopf (3) in einer Richtung quer zu der Spur zu bewegen, um den Kopf neu zu positionieren;

wobei das Plattengerät gekennzeichnet ist durch:

eine Gleichrichtereinrichtung (14) zum Empfangen und Gleichrichten von Positionssignalen (P), die von dem Kopf (3) gelesen werden, wobei die Signale den Teilen der Information entsprechen;

eine Integrationseinrichtung (15) zum Integrieren der gleichgerichteten Positionssignale (E); und

einen A/D-Wandler (16) zum Umwandeln der integrierten und gleichgerichteten Positionssignale (F) in digitale Signale (G) und zum Liefern der digitalen Signale (G) an die Positionsverschiebungseinrichtung (17) in digitaler Form, wobei der vom Indexzeitsteuerungssensor abgetastete Index auf einer Dreheinheit des Motors vorgesehen ist und wobei die Positionsverschiebungseinrichtung (17) die digitalen Signale (G) in Koinzidenz mit den Zeitsteuerungssignalen (T) von dem Indexzeitsteuerungssensor (7) erhält.

2. Plattengerät nach Anspruch 1, wobei die Datenspur eine gewählte Datenspur ist, das Positionsausgangssignal (H) einer Abweichung zwischen der Kopfposition und der zentralen Position der gewählten Datenspur entspricht und die Neupositionierung des Kopfes so erfolgt, daß die Positionsverschiebung des Kopfes aus der zentralen Position der Spur heraus minimal wird.

3. Plattengerät nach Anspruch 1, wobei die Datenspur eine willkürliche Datenspur ist, die Positionsinformationseinrichtungen (S1, S2) auf Referenzspuren vorgesehen sind, die zumindest an beiden Endseiten der Vielzahl von Datenspuren auf der Platte vorgesehen sind, die Positionsverschiebungseinrichtung (17P) so arbeitet, daß sie die Positionen der Referenzpuren in Abhängigkeit von dem Eingangssignal (G) bestimmt, und das Positionsausgangssignal (H) irgendeiner dazwischenliegenden Datenspur zwischen den Referenzdatenspuren auf der Basis eines Interpolationsverfahrens entspricht.

4. Plattengerät nach Anspruch 2 oder Anspruch 3, wobei die Positionierungseinrichtung ein Betätigungsorgan aufweist.

5. Plattengerät nach Anspruch 2 oder Anspruch 3 oder Anspruch 4, wobei die Positionsinformationseinrichtungen (S1, S2) zwei Ummagnetisierungsteile (12a, 12b; 12, 13) aufweisen, die entsprechend den beiden Seiten der Datenspur (10) vorgesehen sind, und der Kopf ein Magnetkopf ist.

6. Plattengerät nach Anspruch 5, und Anspruch 2, wobei die beiden Ummagnetisierungsteile (12a, 12b; 12, 13) eine Teilung haben, die gleich dem Intervall der Datenspuren ist, jeweils um die halbe Teilung der Datenspuren auf beiden Seiten der Datenspuren versetzt sind, und die Teile (12a, 12b) in Längsrichtung der Datenspur versetzt sind, so daß sie nicht übereinander angeordnet sind.

7. Plattengerät zur Positionierung eines Kopfes (3) zum Lesen/Schreiben von Informationen von einer bzw. auf einer Datenspur von einer Vielzahl von Datenspuren (10), die konzentrisch auf einer Platte ausgebildet sind, wobei die Platte Schutzbandbereiche (27a, 27b), die auf der Innenseite und der Außenseite der Datenspuren (10) angeordnet sind, und Positionsinformationseinrichtungen (S1, S2) aufweist, die über einen vorgegebenen radialen Bereich auf den Datenspuren und den Schutzbandbereichen vorgesehen sind und ein vorgegebenes Muster haben, um Kopfpositionsinformationen zu liefern, wobei das Plattengerät folgendes aufweist:

einen Plattenantriebsmotor (5);

eine Positionierungseinrichtung (5, 22), um den Kopf (3) in Abhängigkeit von einem Steuersignal (L) in einer Richtung quer zur Spur zu bewegen;

eine Positionssteuerung (34, 35, 36) zur Erzeugung des Steuersignals in Abhängigkeit von der Position des Kopfes in Relation zu den Schutzbandbereichen und den Datenspuren;

wobei das Plattengerät gekennzeichnet, ist durch:

eine Gleichrichtereinrichtung (32) zum Empfangen und Gleichrichten von Positionssignalen (R), die repräsentative sind für die von dem Kopf (3) gelesene Kopfpositionsinformation;

eine Glättungsschaltung (33) zum Glätten des gleichgerichteten Ausgangssignals (U) von der Gleichrichtereinrichtung (32); und

einen Indexzeitsteuerungssensor (7) um einen Index, der auf einer Dreheinheit des Motors vorgesehen ist, bei jeder Umdrehung abzutasten und ein Zeitsteuerungssignal (T) zur Kennzeichnung eines Ausgangspunktes bezüglich des vorgegebenen radialen Bereiches (11) auf der Platte an die Positionssteuerung zu liefern,

wobei die Positionssteuerung folgendes aufweist: eine Abtast- und Halteschaltung (34), um bei Koinzidenz mit den Zeitsteuerungssignalen von dem Indexzeitsteuerungssensor (7) Abtastsignale (I, J) zu liefern, die abgeben, ob der Kopf sich über dem inneren oder dem äußeren Schutzbandbereich oder über einer der Datenspuren befindet; einen Komparator (35) zur Aufbereitung der Abtastsignale und zur Lieferung eines Vergleichsausgangssignals (K); und eine Positionssteuerschaltung (36) zur Erzeugung des Steuersignals (L) in Abhängigkeit von dem Vergleichsausgangssignal (K).

8. Plattengerät nach Anspruch 7, wobei die Plattenantriebsmotor (5) ein Schrittmotor ist.

9. Plattengerät nach Anspruch 7, wobei die Positionsinformation der Datenspurbereich zwei Ummagnetisierungsbereiche (30a, 30b) sowie nicht ummagnetisierbare Bereiche (31) aufweist, die zu beiden Seiten der Datenspuren vorgesehen sind, und wobei die Positionsinformation von jedem der Schutzbandbereiche einen Ummagnetisierungsbereich (30c, 30d) und einen nicht ummagnetisierbaren Bereich aufweist.

10. Plattengerät nach Anspruch 9, wobei die beiden Ummagnetisierungsbereiche der Datenspurbereiche gleich dem Intervall der Datenspuren vorgesehen sind, versetzt um die halbe Teilung des Intervalles der Datenspuren zu beiden Seiten der Datenspuren, versetzt in der Breitenrichtung der Platte, so daß sie nicht übereinanderliegen, und wobei die Datenspur, die an den Schutzbandbereich angrenzt, sich im Ummagnetisierungsbereich fortsetzt, der radial zum Schutzbandbereich verläuft.

**Revendications**

1. Dispositif de positionnement de la tête (3), pour un appareil à disque du type permettant de lire/d'écrire des informations depuis/sur une piste de données parmi une pluralité de pistes de données (10) formées de manière concentrique sur un disque, le disque comportant des moyens d'information sur la position (S1, S2) disposés sur une aire radiale prédéterminée (11) du disque et comportant un motif prédéterminé afin de fournir différentes sources d'information en accord avec la position relative du déplacement de la tête (3) depuis une position centrale de la piste de donnée, ledit dispositif pour disque comprenant de plus:

un moteur d'entraînement du disque (5);

un moyen de déplacement de la position (17) pour recevoir un signal d'entrée (G) représentatif des différentes sources d'information provenant du moyen d'information sur la position, et pour générer un signal de sortie (H) relatif à la position;

un détecteur de temporisation d'index (7) pour détecter un index à chaque révolution du disque et fournir un signal de temporisation (T) permettant de notifier un point de départ sur l'aire radiale prédéterminée (11) du disque au moyen de déplacement de la position (17); et un mécanisme de positionnement (5, 9, 18) apte à recevoir le signal de sortie relatif à la position (H) précité afin de produire en réponse audit signal de sortie (H) un signal numérique adapté au déplacement de la tête (3) dans une direction transversale à la piste, et ce afin de repositionner ladite tête;

caractérisé en ce qu'il comporte:

un moyen de rectification (14) apte à recevoir et à rectifier les signaux de position (P), lus par la tête (3), lesdits signaux correspondant aux sources d'information;

un moyen d'intégration (15) permettant d'intégrer les signaux de position rectifiées (E); et

un convertisseur analogique/numérique (16) pour convertir les signaux de position rectifiés et intégrés (F) en signaux numériques (G) et ainsi fournir un signal numérique (G) au moyen de déplacement de la position (17) sous une forme numérique, l'index détecté par le détecteur de temporisation d'index étant prévu sur l'unité rotative du moteur, et le moyen de déplacement de la position (17) recevant en entrée lesdits signaux numériques (G) de façon coïncidente avec les signaux de temporisation (T) provenant du détecteur de temporisation d'index (2).

2. Dispositif selon la revendication 1, caractérisé en ce que ladite piste de données est une piste de données choisie, le signal de sortie de position (H) correspondant à une déviation quelconque entre la position de la tête et la position centrale de la piste de données choisie et le repositionnement de la tête étant effectué de telle façon que l'on minimise le déplacement de la position de la tête depuis la position centrale de la piste.

3. Dispositif selon la revendication 1, caractérisé en ce que ladite piste de données est une piste de données arbitraire, le moyen d'information sur la position (S1, S2) étant disposé sur une piste de données de référence, disposée au moins sur chacune des faces d'extrémité d'une pluralité de pistes de données sur le disque, le moyen de déplacement de la position (17P) servant à déterminer les positions des pistes de référence en réponse au signal d'entrée (G), et le signal de sortie de position (H) correspondant à toutes pistes de donnée intermédiaire comprises entre les pistes de donnée de référence et ce, sur la base d'une interpolation technique.

4. Dispositif selon la revendication 2 ou 3, caractérisé en ce que le dispositif de positionnement comprend un mécanisme de déclenchement.

5. Dispositif selon l'une des revendications 2 à 4, caractérisé en ce que le moyen d'information sur la position (S1, S2) comprend deux portions de reversement de flux (12a, 12b; 12, 13) disposées de façon à correspondre à chacune des faces de la piste de données (10), ladite tête (3) étant une tête magnétique.

6. Dispositif selon la revendication 5, dépendant de la revendication 2, caractérisé en ce que les deux portions à renversement de flux (12a, 12b; 12, 13) comportent un pas égal à l'intervalle des pistes de données, et sont respectivement déplacées de la moitié du pas des piste de donnée sur chacune des faces de la piste de donnée, alors que les portions (12a, 12b) sont déplacées longitudinalement par rapport à la piste de donnée afin de ne pas se superposer les unes aux autres.

7. Dispositif de positionnement de la tête (3) pour un appareil à disque du type permettant de lire/d'écrire des informations depuis/sur une piste de données parmi une pluralité de piste de données (10) formées de façon concentrique sur un disque, ledit disque comprenant des aires formant bande de sauvegarde (27a, 27b) disposées à l'intérieur et à l'extérieur des pistes de donnée (10) et comprend un moyen d'information sur la position (S1, S2) disposé sur une aire radiale prédéterminée (11) des pistes de données ainsi que des aires de bandes de sauvegarde et possédant un motif prédéterminé pour fournir une information relative à la position de la tête, ledit dispositif pour disque comprenant de plus:

un moteur d'entraînement du disque (5);

un mécanisme de positionnement (5, 22) pour déplacer la tête (3) dans une direction transversale à la piste et en fonction d'un signal de contrôle (L);

un moyen de contrôle de la position (34, 35, 36) permettant de générer un signal de contrôle en fonction de la position de la tête et en fonction des aires de bande de sauvergarde ainsi que des pistes de données;

caractérisé en ce qu'il comprend;

un moyen de rectification (32) permettant de revevoir et de rectifier les signaux de position (L) représentatif des informations sur la position de la tête et qui sont lus par ladite tête (3);

un circuit d'amortissement (33) pour amortir le signal de sortie rectifé (U) provenant du moyen de rectification (32); et comprend de plus un détecteur de temporisation d'index (7) apte à décoder un index provenant d'une unité rotative du moteur à chaque révolution et apte à fournir un signal de temporisation (T) permettant de notifier le point de départ de l'aire radiale prédéterminée (11) sur le disque au moyen de contrôle de la position;

ledit moyen de contrôle de la position comprenant un circuit d'échantillonnage et de maintien (34) pour fournir, de façon coïncidente aux signaux de temporisation provenant du détecteur de temporisation d'index (7), des signaux échantillonés (I, J) relatifs au fait que la tête est ou n'est pas positionnée au dessus de l'aire de bande de sauvergarde interne ou externe ou au dessus de l'une des pistes de données, ledit moyen de contrôle de la position comportant également un comparateur (35) apte à préparer les signaux échantillonés et à fournir un signal de sortie permettant leur comparaison (15), ainsi qu'un circuit de contrôle de la position (36) permettant de générer un signal de contrôle (L) en réponse au signal de sortie de comparaison (K).

8. Dispositif selon la revendication 7, caractérisé en ce que le moteur d'entraînement du disque (5) est un moteur pas à pas.

9. Dispositif selon la revendication 7, caractérisé en ce que l'information sur la position des aires de piste de données comporte deux aires à flux réversibles (30a, 30b) et des aires à flux non réversibles (31) disposés sur chacune des faces des pistes de données, les informations de position de chacune des aires de bandes de sauvegarde comportent une aire à flux inversé (30c, 30d) et une aire à flux non inversé.

10. Dispositif selon la revendication 9, caractérisé en ce que les deux aires à flux inversés desdites aires des pistes de données sont égales à l'intervalle de la piste de donnée déplacé d'un demi pas de l'intervalle des pistes de données à chacune des faces des pistes de données et déplacé dans le sens de la largeur du disque afin de ne pas se superposer les unes aux autres, et que les pistes de données adjacentes à l'aire de la bande de sauvegarde sont prolongées jusqu'à l'aire à flux renversé s'étendant radialement depuis l'aire de la bande de sauvegarde précitée.

FIG. 1 PRIOR ART

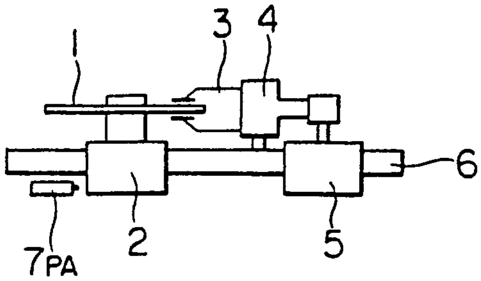


FIG. 2 PRIOR ART

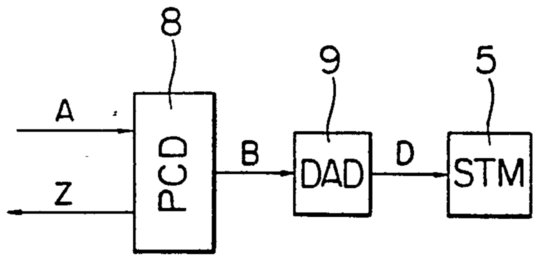


FIG. 3

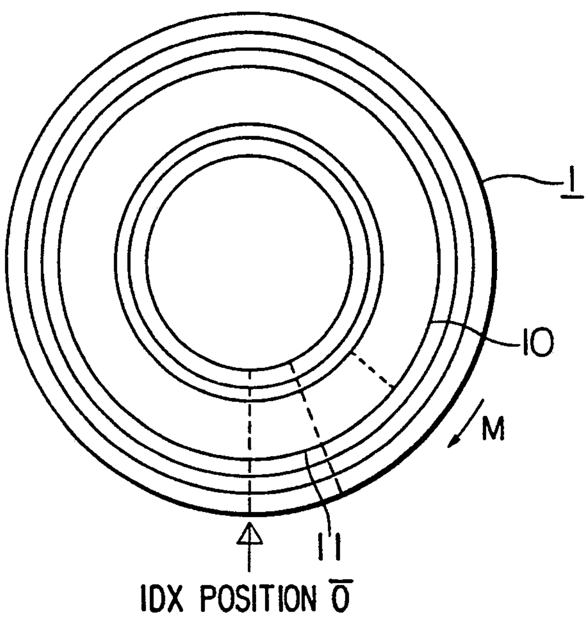

FIG. 4

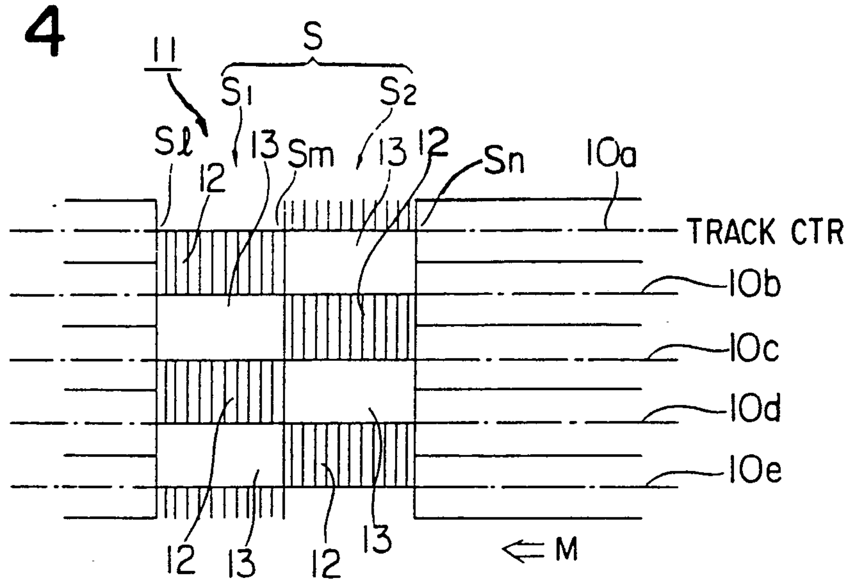


FIG. 5

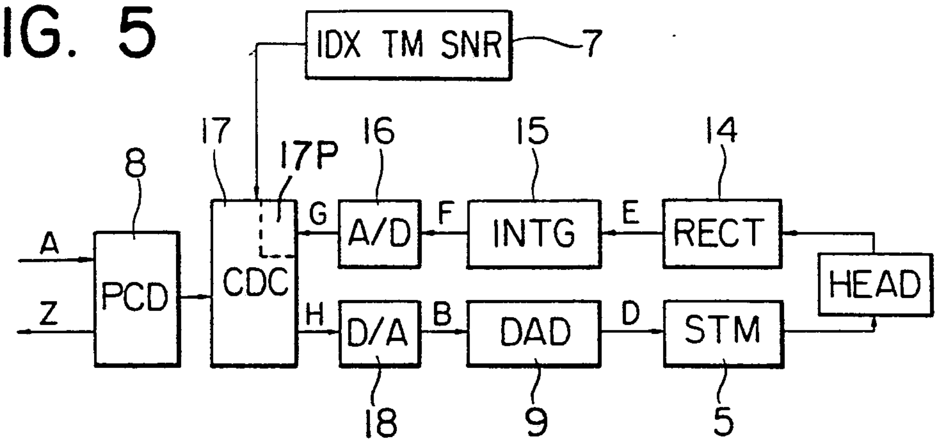


FIG. 6

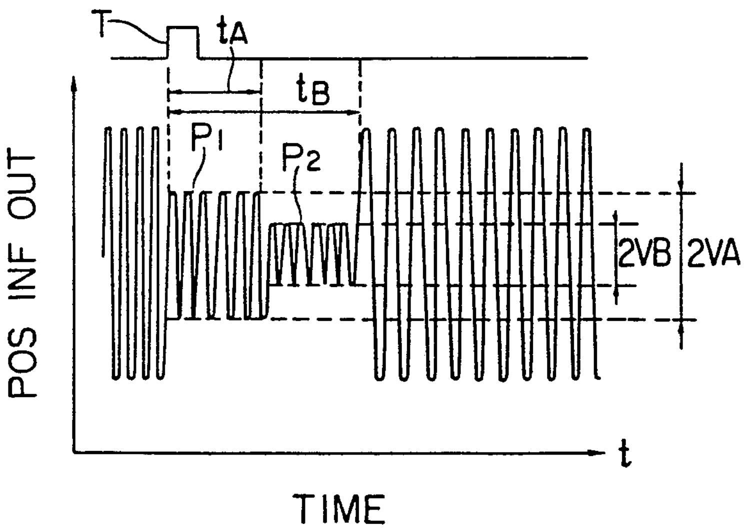

FIG. 7

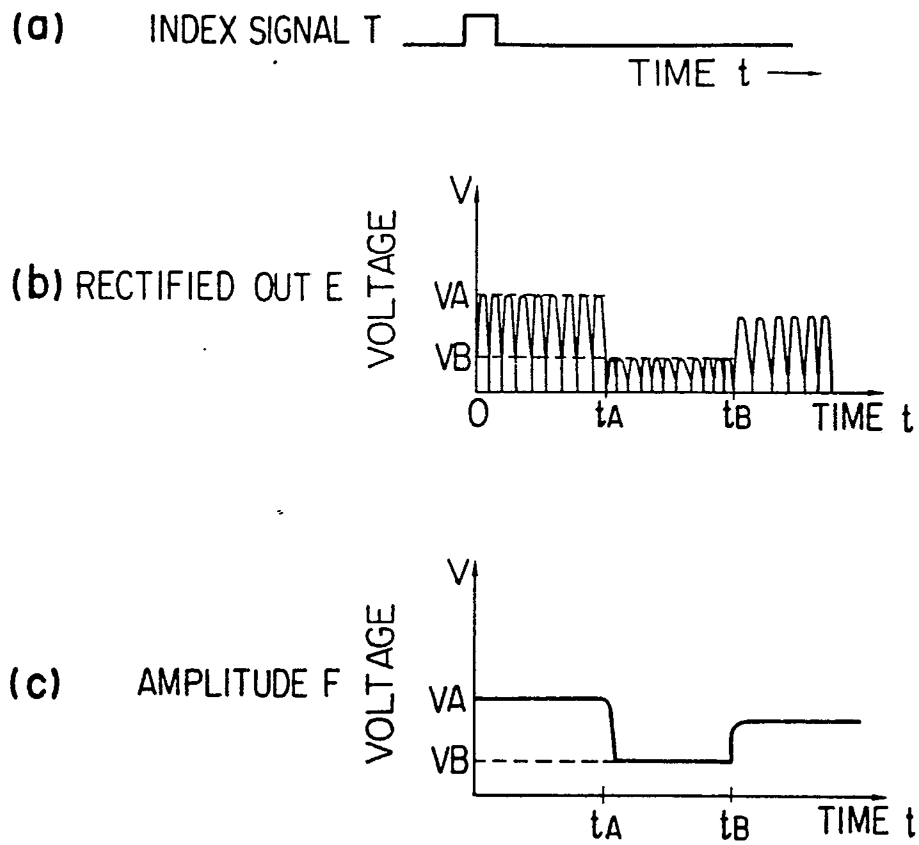
(a)
INDEX SIGNAL T
TIME t
(b) RECTIFIED OUT E
VOLTAGE
V
VA
VB
0
tA
tB
TIME t
(c) AMPLITUDE F
VOLTAGE
V
VA
VB
tA
tB
TIME t

FIG. 8

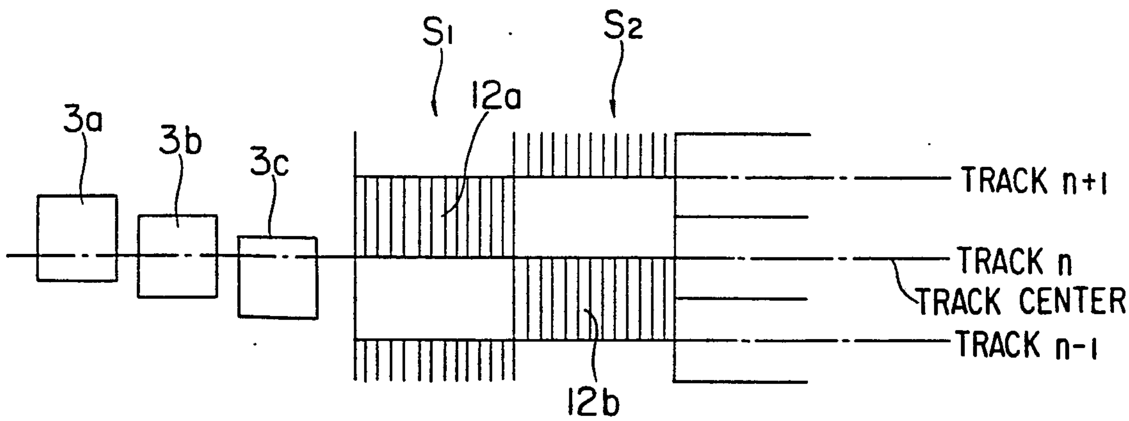
S1
S2
12a
3a
3b
3c
TRACK n+1
TRACK n
TRACK CENTER
TRACK n-1
12b

FIG. 9

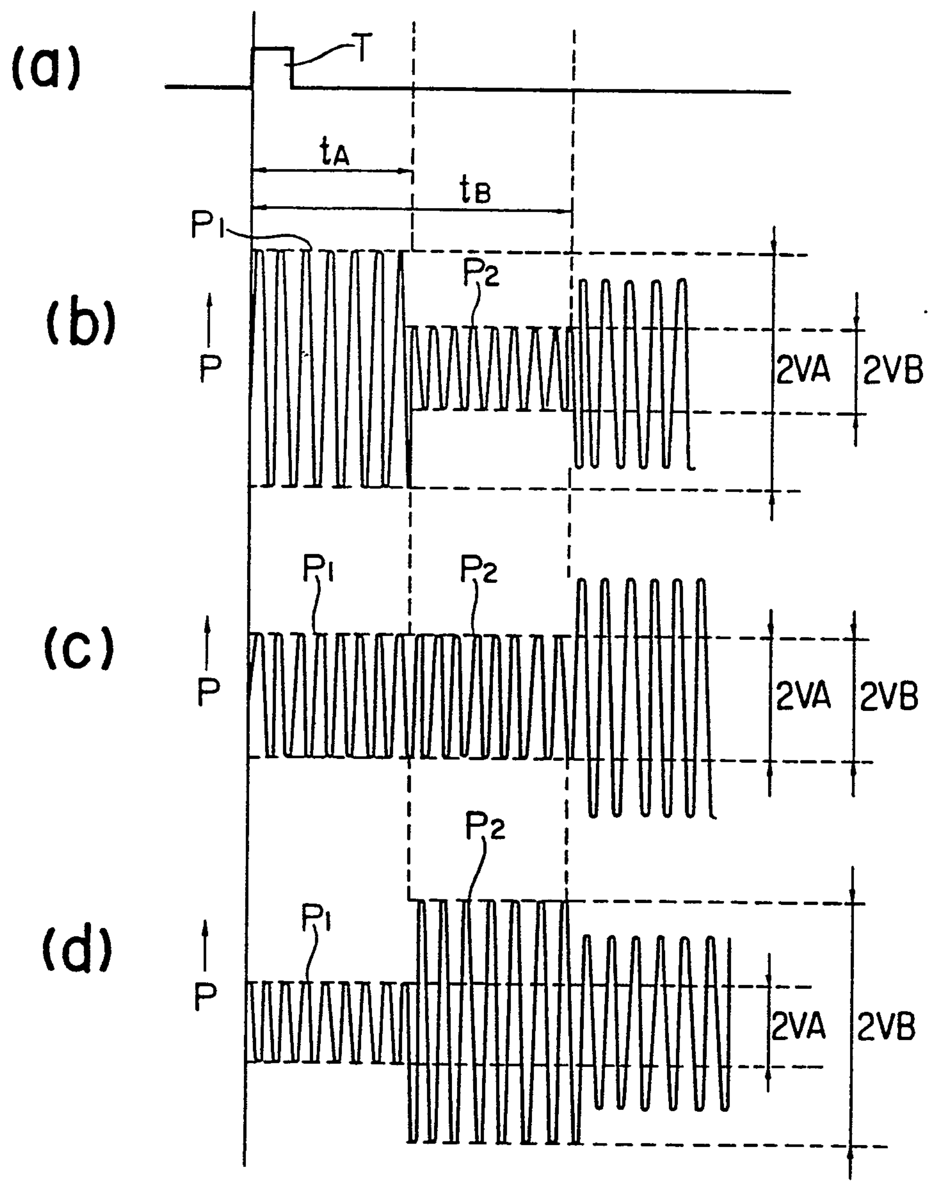

FIG. 10

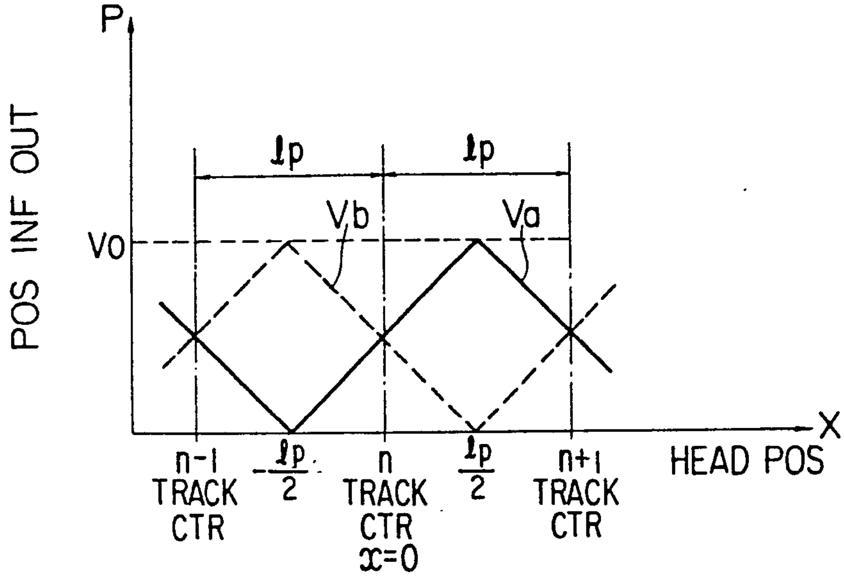
P
POS INF OUT
Vo
ℓp
ℓp
Vb
Va
X
n-1
TRACK
CTR
ℓp/2
n
TRACK
CTR
x=0
ℓp/2
n+1
TRACK
CTR
HEAD POS

FIG. 11

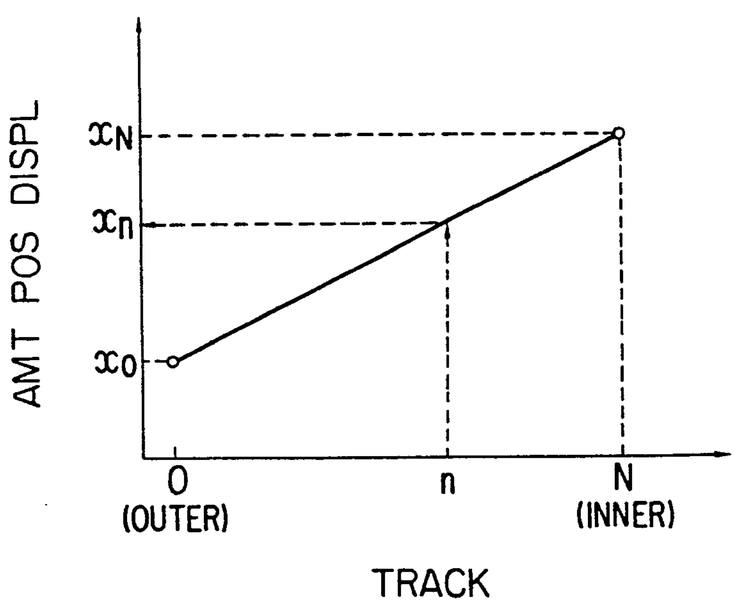
AMT POS DISPL
xN
xn
xo
0
(OUTER)
n
N
(INNER)
TRACK

FIG. 12

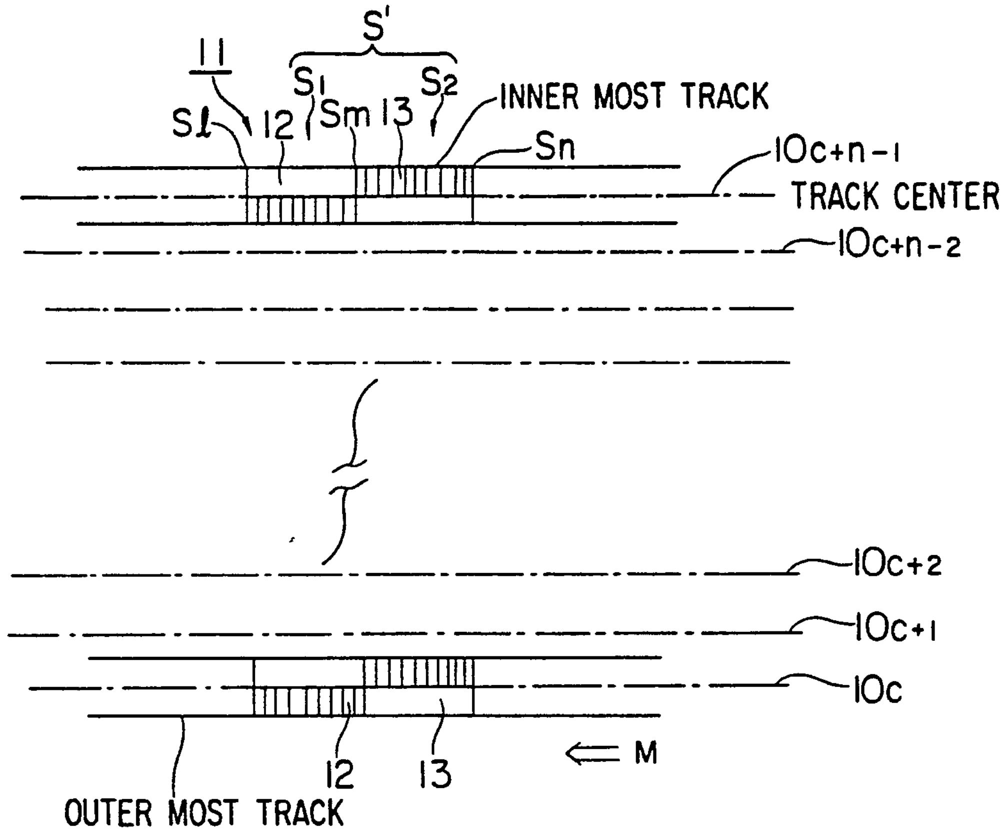
S'
11
Sl
12
S1
Sm
13
S2
INNER MOST TRACK
Sn
10c+n-1
TRACK CENTER
10c+n-2
10c+2
10c+1
10c
12
13
M
OUTER MOST TRACK

FIG. 13

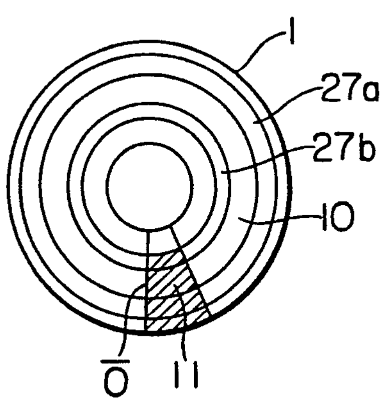
1
27a
27b
10
O
11

FIG. 14

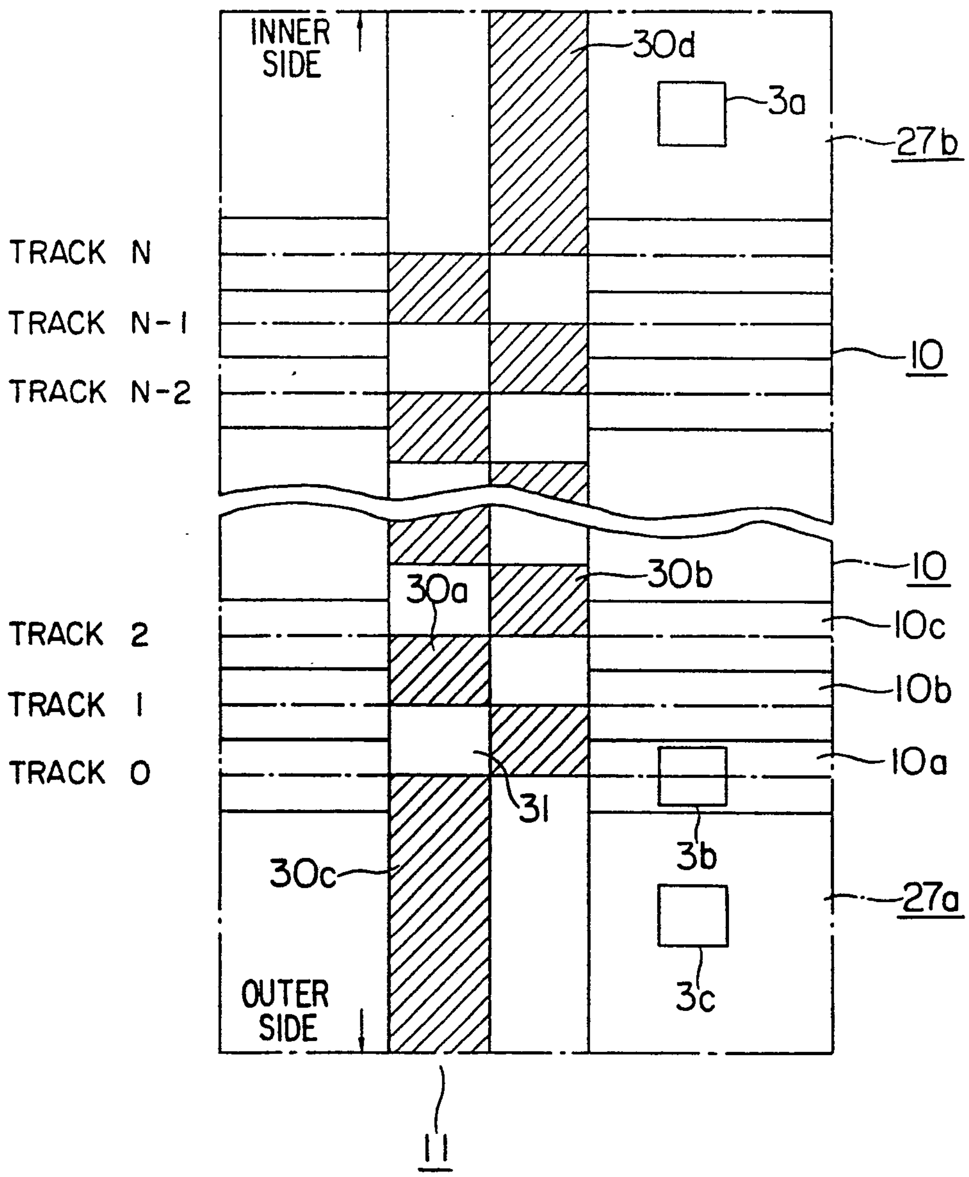
INNER SIDE
30d
3a
27b
TRACK N
TRACK N-1
TRACK N-2
10
10
30a
30b
TRACK 2
10c
TRACK 1
10b
TRACK 0
10a
31
3b
30c
27a
3c
OUTER SIDE
11

FIG. 15

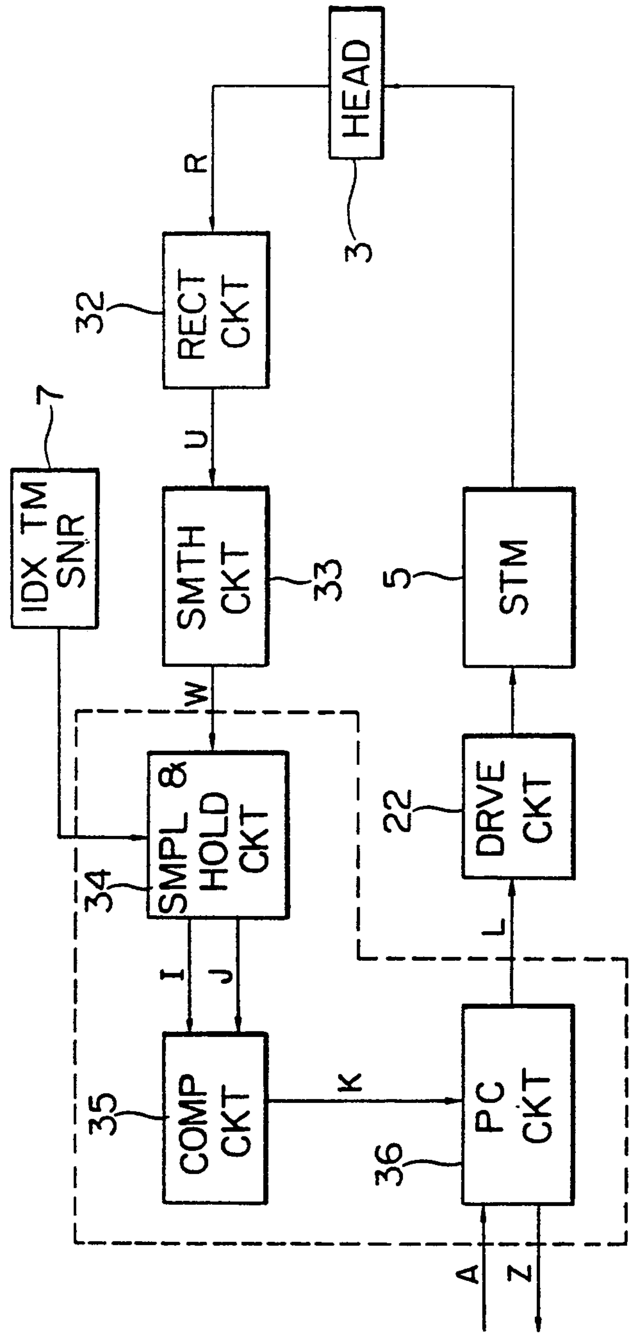
HEAD
3
R
RECT CKT
32
U
IDX TM SNR
7
SMTH CKT
33
STM
5
W
SMPL & HOLD CKT
34
DRVE CKT
22
L
I
J
COMP CKT
35
K
PC CKT
36
A
Z

FIG. 16

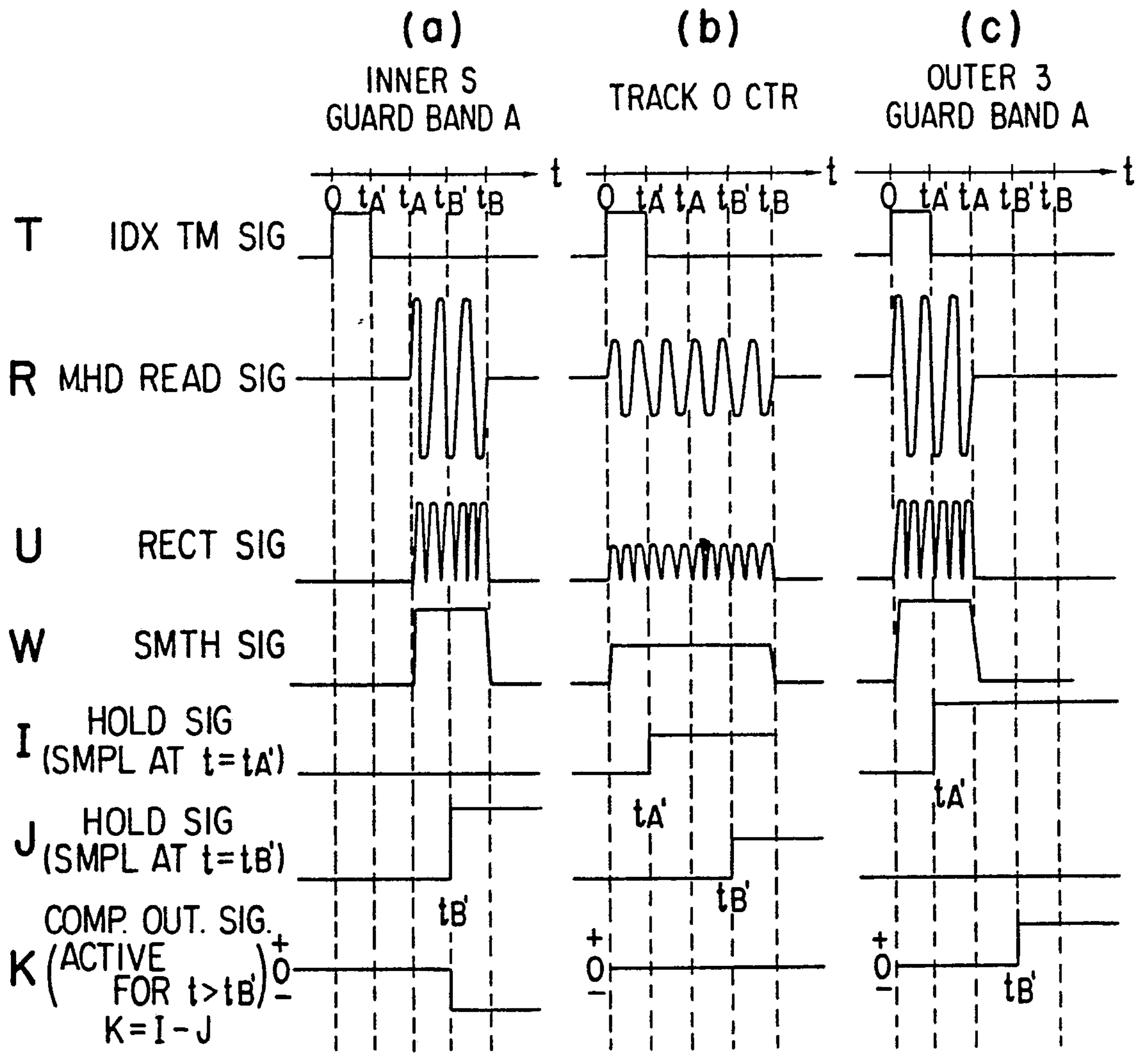
(a)
INNER 5
GUARD BAND A
(b)
TRACK 0 CTR
(c)
OUTER 3
GUARD BAND A
t
0 tA' tA tB' tB
T IDX TM SIG
R MHD READ SIG
U RECT SIG
W SMTH SIG
I HOLD SIG (SMPL AT t=tA')
J HOLD SIG (SMPL AT t=tB')
K COMP. OUT. SIG. (ACTIVE FOR t>tB') K=I-J
+
0
−
tA'
tB'